# FASCICULE DE BREVET EUROPEEN

(11) **EP 3 700 783 B1**
(45) Date de publication et mention de la délivrance du brevet: **17.11.2021**
(21) Numéro de dépôt: 18769189.4
(22) Date de dépôt: 17.09.2018
(51) Int. Cl.: B60R 21/0136

(54) **DISPOSITIF DE DÉTECTION DE CHOC POUR RADAR**
AUFPRALLDETEKTIONSVORRICHTUNG FÜR RADAR
IMPACT DETECTION DEVICE FOR RADAR

(30) Priorité: 23.10.2017 FR 1759956
(43) Date de publication de la demande: 02.09.2020
(73) Titulaire: Renault S.A.S., 92100 Boulogne-Billancourt (FR)
(72) Inventeur: VEILLARD, Arnaud, 78114 Magny les Hameaux (FR)
(86) Numéro de dépôt international: PCT/EP2018/075000
(87) Numéro de publication internationale: WO 2019/081126

(56) Documents cités:
- EP-A2- 1 350 683
- DE-A1-102005 016 066
- DE-A1-102005 042 842
- FR-A5- 2 146 781
- GB-A- 1 293 299

## Description

L'invention concerne un dispositif de détection de choc pour radar de véhicule. Elle trouve une application avantageuse sous la forme d'un procédé de détection de défaillances d'un radar situé derrière un bouclier dans un véhicule automobile équipé d'un tel dispositif de détection.

Le freinage automatique d'urgence requiert l'installation de radars à l'avant et à l'arrière des véhicules, ces radars sont notamment positionnés derrière les boucliers. Afin qu'aucune pièce métallique ou autre obstacle aux ondes électro-magnétiques n'interfère avec le cône de détection de ces radars, ils sont situés au plus proche de la peau du bouclier qui est localement traité voire percé pour être transparent aux dites ondes. Par conséquent, les radars sont aussi exposés aux risques de chocs, de faible intensité (tel qu'en stationnement) ou de forte intensité. Or, lors d'un choc de faible intensité, le bouclier se déforme afin d'absorber le choc puis reprend sa forme initiale. De fait, le radar peut avoir, ou non, subi une détérioration ou un désalignement géométrique sans que cela ne soit visible par l'utilisateur du véhicule. De plus, actuellement les radars nécessitent une phase de roulage pour évaluer un tel éventuel désalignement si bien que l'utilisateur du véhicule peut commencer un trajet avec un radar défaillant.

GB 1 293 299 A divulgue un dispositif de détection de choc de véhicule automobile.

Un des buts de l'invention est de remédier à au moins une partie des inconvénients de la technique antérieure en fournissant un dispositif de détection de choc pour un tel radar et un procédé, utilisant ledit dispositif, permettant de diagnostiquer un tel radar et d'avertir le conducteur de la défaillance du radar avant qu'il n'initie un nouveau déplacement.

A cette fin, l'invention propose un dispositif de détection de choc pour radar de bouclier de véhicule automobile localisé dans la périphérie dudit radar, caractérisé en ce qu'il comporte :
- un corps creux,
- un piston mobile comportant une tige dont une première extrémité demeure à l'extérieur dudit corps creux et dont une seconde extrémité demeure à l'intérieur dudit corps creux et ladite tige comporte entre ses deux extrémités un plan sensiblement perpendiculaire à ladite tige qui demeure à l'intérieur dudit corps creux, ledit piston mobile étant apte à coulisser dans ledit corps creux en suivant un mouvement de translation fonction de la déformation locale dudit bouclier, ledit corps creux comportant une face d'entrée sensiblement perpendiculaire au mouvement dudit piston, la surface périphérique interne de la face d'entrée formant un rebord apte à retenir la seconde extrémité dudit piston en position nominale, des contacts électriques entre ledit piston et ledit corps creux formant en position nominale un circuit électrique fermé, et ledit circuit étant ouvert quand le piston est en position non-nominale dans ledit corps creux,
- un moyen de rappel du piston,
- un moyen de retenue apte à empêcher le rappel dudit piston vers la position nominale lorsque la course d'enfoncement dudit piston dans ledit corps creux dépasse un seuil d'enfoncement prédéterminé.

Grâce à l'invention, le circuit électrique sera maintenu ouvert dès que le radar aura subi un choc dépassant un seuil calibré d'enfoncement, correspondant à un enfoncement du bouclier ayant atteint le radar.

Selon une caractéristique avantageuse, en position nominale, la première extrémité du piston mobile est en contact avec ledit bouclier, ce qui simplifie la géométrie globale du dispositif.

Selon une caractéristique avantageuse, ledit circuit électrique est formé par au moins un élément conducteur électrique positionné sur ledit plan dudit piston et par au moins deux contacteurs électriques fixes disjoints localisés sur la surface périphérique de la face interne d'entrée et reliés respectivement à l'entrée et la sortie d'un circuit électrique. Ce circuit électrique est donc passif et ne requiert pas d'alimentation électrique pendant le stationnement du véhicule.

Selon une autre caractéristique avantageuse, ledit élément conducteur est de forme au moins partiellement annulaire sur la périphérie dudit plan, permettant de s'adapter à la section interne du corps creux dans lequel le piston, coiffé à son extrémité de l'élément conducteur, coulisse.

Selon une autre caractéristique avantageuse, le moyen de rappel est un ressort, ce qui permet une mise au point aisée par tarage dudit ressort.

Selon une autre caractéristique avantageuse, ledit moyen de retenue est solidaire de la périphérie interne du corps creux entre la face d'entrée et la face interne opposée en extrémité dudit corps creux. L'avantage de ce moyen de retenue est d'empêcher passivement la fermeture du circuit électrique dès que le seuil d'enfoncement prédéterminé a été dépassé.

Selon une autre caractéristique avantageuse, ledit moyen de retenue est un linguet métallique ou plastique formant une butée inclinée. L'avantage de ce moyen de retenue est qu'il maintient l'étanchéité du dispositif.

Selon une autre caractéristique avantageuse, ledit moyen de retenue comporte une lame ressort fixée à la première extrémité du piston mobile et un orifice dans le corps creux, ladite lame et ledit orifice étant conformés de manière à ce que la forme coudée de ladite lame s'insère en se bloquant automatiquement dans ledit orifice dès que le seuil d'enfoncement prédéterminé a été dépassé. Cette conformation permet de bénéficier d'un dispositif réarmable par l'intervention d'un technicien lors d'un passage en unité d'après-vente. En effet, l'intervention se fait en appuyant par l'extérieur du corps creux sur ladite lame, le dispositif ainsi réarmé étant de nouveau en position nominale et réutilisable.

Selon une autre caractéristique avantageuse, ledit dispositif est fixé à un châssis dudit véhicule et notamment localisé sur le même plan vertical que ledit radar à moins de 10 cm en-dessous ou au-dessus dudit radar. Cette configuration est celle qui permet avec un seul dispositif d'être le plus représentatif de l'effort subi par le radar sans interférer avec le cône du radar.

Selon une autre caractéristique avantageuse, le dispositif délivre un signal électrique représentatif de l'état ouvert ou fermé dudit circuit électrique, ce qui permet un diagnostic simple et robuste.

L'invention concerne également un véhicule automobile comprenant au moins un tel dispositif. Ce véhicule présente des avantages analogues à ceux du dispositif.

Enfin, l'invention concerne également un procédé de détection de défaillances d'un radar de bouclier de véhicule automobile intégrant un dispositif de détection de choc, ledit procédé comportant :
- une étape de démarrage dudit véhicule,
- une étape de réception dudit signal électrique,
- une étape de diagnostic dudit radar,
- une étape d'alerte du conducteur en cas de diagnostic de radar défaillant. Ce procédé présente des avantages analogues à ceux du dispositif et permet d'alerter le conducteur dès que le circuit électrique est ouvert, c'est-à-dire que le radar a subi un choc l'ayant impacté.

D'autres caractéristiques et avantages apparaîtront à la lecture d'un mode de réalisation préféré décrit en référence aux figures dans lesquelles:
- la figure 1 représente une vue en coupe de l'avant d'un véhicule intégrant un dispositif selon l'invention dans sa position nominale ; et,
- la figure 2 est une vue en coupe de l'avant d'un véhicule intégrant un dispositif selon l'invention lors d'un choc dans le bouclier avant ; et ,
- la figure 3 est une vue en coupe de la structure d'un dispositif conforme à l'invention ; et ,
- les figures 4 a et b sont des vues en coupe de la structure d'un dispositif conforme à l'invention dans différentes positions ; et ,
- la figure 5 est un logigramme du procédé de fonctionnement d'un dispositif selon l'invention ; et ,
- la figure 6 est une vue tridimensionnelle d'un dispositif réarmable conforme à l'invention, et,
- les figures 7a, b, c, d et e sont des vues en coupe de la structure d'un dispositif réarmable conforme à l'invention dans différentes positions ; et,
- la figure 8 est une vue en coupe de la structure d'un autre exemple de dispositif réarmable conforme à l'invention.

Dans l'ensemble du texte les directions et orientations sont désignées en référence à un repère orthonormé direct XYZ classiquement utilisé en conception automobile, dans lequel X désigne la direction longitudinale du véhicule, dirigé vers l'avant, Y est la direction transversale au véhicule, dirigé vers la droite et Z est la direction verticale dirigée vers le haut. Les notions « avant » et « arrière » sont indiquées en référence au sens de marche normal vers l'avant du véhicule. Dans l'ensemble de la description le terme « sensiblement » signifie qu'un léger écart peut être admis par rapport à une position ou orientation nominale déterminée, par exemple « sensiblement vertical » signifie qu'un écart de l'ordre de 10° par rapport à une orientation strictement verticale est admis dans le cadre de l'invention. Pour plus de clarté, les éléments identiques ou similaires sont repérés par des signes de référence identiques sur l'ensemble des figures.

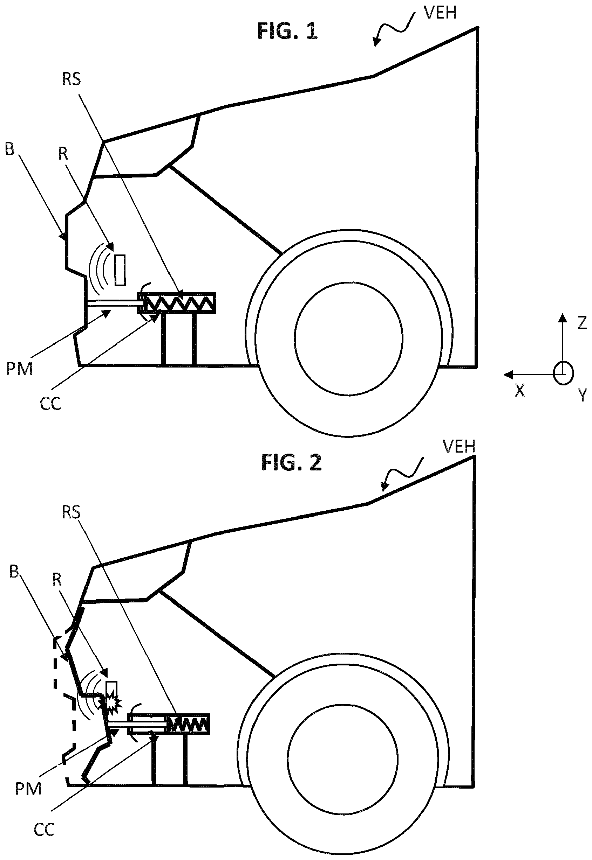

Selon la vue en coupe d'un premier mode de réalisation de l'invention représenté à la **figure 1****,** l'avant d'un véhicule VEH intègre un dispositif de détection de choc pour un radar R situé derrière un bouclier B de véhicule automobile localisé dans la périphérie du radar R. Le radar R est situé à l'arrière du bouclier B et le dispositif de détection de choc est situé à l'aplomb du radar R. Plus particulièrement, le dispositif est fixé au châssis dudit véhicule VEH et localisé sur le même plan vertical que le radar R, à moins de 10 cm en-dessous du radar, tout en n'interférant pas avec le cône du radar R. Cette position est privilégiée si le bouclier avant dispose d'un unique dispositif.

Pour un radar de bouclier situé à l'arrière du véhicule, l'architecture préférentielle est symétrique.

Le dispositif comporte deux éléments mécaniques mobiles :
- un piston mobile PM coulissant dans un corps creux CC cylindrique, et,
- un ressort RS constituant un moyen de rappel du piston.

Sur cette vue en coupe, le dispositif est en position nominale, qui correspond à la position initiale avant tout choc et à la position qui sera reprise après un faible choc, c'est-à-dire un choc dont l'intensité ne fait pas déplacer le piston mobile PM au-delà du seuil d'enfoncement prédéterminé. Ainsi, sur cette première figure, c'est-à-dire en position statique nominale, le piston mobile PM est composé d'une tige, d'axe horizontal, munie d'un plan perpendiculaire à la tige en forme de disque à une de ses extrémités. La première extrémité du piston mobile PM est en contact avec le bouclier B et la seconde extrémité du piston mobile PM, comportant un plan perpendiculaire à la tige en forme de disque, est à l'intérieur du corps creux CC. Ce contact d'une extrémité du piston PM sur le bouclier B est assuré grâce au ressort RS. En effet, une extrémité du ressort RS est fixée au corps creux CC, et plus particulièrement à la face interne du corps creux CC opposée à la face d'entrée FE, et l'autre extrémité du ressort RS est libre ou fixée à la seconde extrémité E2 du piston mobile PM. Le choix du ressort RS comme moyen de rappel du piston PM facilite la géométrie globale du dispositif. Les choix d'un corps creux CC cylindrique et de plan en forme de disque perpendiculaire à la tige du piston mobile PM à la seconde extrémité, voire à chaque extrémité du piston permettent d'une part une meilleure efficacité du piston mobile PM, et d'autre part de s'absoudre de difficultés liées à du frottement ou à des mouvements de rotation desdits plans de par le mouvement du ressort RS, comparativement à des formes non circulaires également envisageables (tube et plan de sections carrées par exemple).

Sur la **figure 2** est représentée la même vue en coupe de ce premier mode de réalisation de l'invention lors d'un choc sur le bouclier B avant. La position initiale du bouclier B est représentée en pointillés alors que la position du bouclier B à cet instant du choc est représentée en ligne continue. L'enfoncement du bouclier B par déplacement en translation du bouclier B vers l'intérieur du véhicule VEH est ainsi matérialisé. Ce mouvement en translation horizontale du bouclier B a entraîné la translation horizontale du piston mobile PM poussé par son extrémité en contact avec le bouclier B, le piston mobile PM coulissant dans le corps creux CC et comprimant le ressort RS. Ce dispositif est ainsi adapté à tout type de véhicule, le ressort RS étant taré en fonction de la rigidité du bouclier, c'est-à-dire que le ressort RS doit être suffisamment taré pour maintenir le piston en position nominale fermée tant qu'il n'y a pas de choc mais uniquement des vibrations (par exemple : route avec pavés, dos d'âne...). En effet, le ressort RS ne doit pas servir d'amortisseur de choc du bouclier. En outre, la longueur du piston mobile PM est déterminée en fonction de l'enfoncement maximal du bouclier B par rapport à la position de la première extrémité du piston mobile PM. Sur cette figure le radar R est impacté par le choc, le dispositif de détection de défaillance diagnostiquant en continu, permettra l'alerte du conducteur si la course d'enfoncement dudit piston PM dans ledit corps creux CC dépasse un seuil d'enfoncement prédéterminé, comme cela va être décrit avec les figures suivantes.

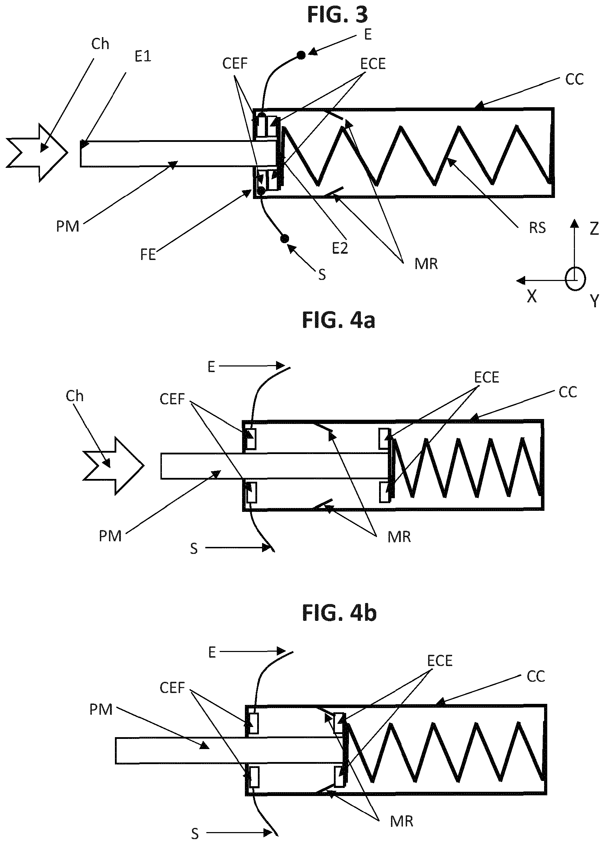

En effet, avant d'expliquer en détail le fonctionnement de ce dispositif de détection de défaillance, la **figure 3** décrit plus précisément la structure d'un tel dispositif. Ainsi, le dispositif comporte :
- un corps creux CC,
- un piston mobile PM comportant une tige dont une première extrémité E1 demeure à l'extérieur dudit corps creux CC et dont une seconde extrémité E2 demeure à l'intérieur dudit corps creux CC et comporte un plan sensiblement perpendiculaire à ladite tige, ledit piston mobile PM étant apte à coulisser dans ledit corps creux CC en suivant un mouvement de translation fonction de la déformation locale dudit bouclier, ledit corps creux CC comportant une face d'entrée FE sensiblement perpendiculaire au mouvement dudit piston PM, la surface périphérique interne de la face d'entrée FE formant un rebord apte à retenir la seconde extrémité E2 dudit piston PM en position nominale, les contacts électriques entre ledit piston PM et ledit corps creux CC formant en position nominale un circuit électrique fermé, et ledit circuit étant ouvert quand le piston PM est en position non-nominale dans ledit corps creux CC, c'est-à-dire quand la seconde extrémité E2 du piston mobile PM ne prend plus appui sur les éléments électriques fixés à la surface de la face d'entrée FE,
- un moyen de rappel du piston, constitué ici par un ressort RS,
- un moyen de retenue MR apte à empêcher le rappel dudit piston PM vers la position nominale lorsque la course d'enfoncement dudit piston PM dans ledit corps creux CC dépasse un seuil d'enfoncement prédéterminé.
Le piston PM comporte donc de part de d'autre de ladite tige :
- une première extrémité E1 qui demeure en dehors du corps creux CC, cette extrémité étant situé à proximité du bouclier et apte à recevoir un choc, représenté par la flèche Ch,
- une seconde extrémité E2 qui demeure à l'intérieur du corps creux CC. Ainsi, en position statique nominale, c'est-à-dire avant tout choc ou après tout choc n'altérant pas le radar R, un circuit électrique est formé par au moins un élément conducteur électrique ECE positionné sur la seconde extrémité dudit piston PM et par au moins deux contacteurs électriques fixes CEF disjoints localisés sur la surface périphérique de la face interne d'entrée FE et reliés respectivement à l'entrée E et la sortie S d'un circuit électrique. Chaque contacteur électrique fixe CEF constitue ainsi une borne du circuit électrique. Chaque contacteur ECE et élément conducteur CEF, constituant une borne d'interrupteur électrique, est en métal, et préférentiellement en cuivre. L'élément conducteur électrique ECE à la seconde extrémité du piston PM qui se trouve dans le corps creux CC est de forme au moins partiellement annulaire sur la périphérie dudit piston PM. Si le piston est de section circulaire, il est préférable que l'élément conducteur CE soit annulaire à 360° et si le piston est de section autre, carrée par exemple, sans rotation angulaire possible des contacteurs alors l'élément conducteur peut être de section restreinte, en forme de C par exemple, de manière à recouvrir au moins partiellement les deux contacteurs électriques fixes CEF disjoints localisés sur la surface périphérique de la face interne d'entrée FE en position nominale. Cette figure illustre donc la position statique nominale, c'est à dire initiale avant un choc ou après un choc entraînant un déplacement du piston mobile PM dans le corps creux CC inférieur au seuil d'enfoncement prédéterminé. Le contact électrique est assuré entre l'entrée E et la sortie S du circuit électrique via les contacts entre les deux contacteurs électriques CEF fixes disjoints de la face interne d'entrée du corps creux CC et l'élément conducteur électrique ECE en extrémité du piston mobile PM. En position nominale, il y a ainsi continuité électrique entre un contacteur CEF dit d'entrée (car connecté à l'entrée E du circuit électrique) du corps creux CC et l'élément conducteur électrique ECE en extrémité du piston mobile PM et un contacteur CEF dit de sortie (car connecté à la sortie S du circuit électrique) du corps creux CC. La continuité électrique est ainsi assurée. Les deux contacteurs électriques CEF fixes localisés sur la surface périphérique de la face interne d'entrée FE sont disjoints de manière à ne pas assurer de continuité électrique entre eux quand il n'y a pas de contact avec l'élément conducteur électrique ECE en extrémité du piston mobile PM. En effet, le circuit électrique est alors ouvert dès que le contact entre l'élément conducteur électrique ECE à l'extrémité du piston PM qui se trouve dans le corps creux CC et les contacteurs électriques fixes CEF est rompu. De fait, dès qu'un choc a lieu sur le bouclier B à proximité du radar R, le circuit électrique s'ouvre. Si le choc est faible et n'impacte pas le radar R, le ressort RS permettra au piston mobile PM de reprendre sa position nominale. Dans le cas d'un choc impactant le radar R, le moyen de retenue MR empêchera le rappel du piston PM vers la position nominale. Pour ce faire, un moyen de retenue MR est solidaire de la périphérie interne du corps creux CC entre la face d'entrée et l'extrémité opposée dudit corps creux CC, par exemple à moins de 70 mm de la face d'entrée. La valeur de 70 mm correspondant à l'enfoncement moyen constaté du bouclier lors d'un choc d'après la norme « ECE 42 » dont l'énergie transmise est d'environ 2500 daN. La calibration du positionnement du moyen retenue MR, c'est-à-dire le seuil d'enfoncement prédéterminé auquel est placé le moyen de retenue MR, est fonction de la position du radar par rapport au bouclier B. En effet, si la première extrémité E1 du piston mobile PM est en contact avec la peau du bouclier, ce seuil correspond à la course du piston mobile PM jusqu'à la verticale du radar R, soit la distance sur l'axe horizontal bouclier au repos - radar.
Dans un mode de réalisation préférentiel le moyen de retenue est un linguet métallique ou plastique formant une butée inclinée. Le moyen de retenue MR est ainsi conformé de manière :
- à laisser coulisser l'extrémité du piston mobile PM coiffé de l'élément conducteur électrique ECE lors de l'enfoncement du bouclier B et,
- à le retenir bloqué lors du rappel du ressort RS après un tel choc, de manière à garantir que le circuit électrique reste ouvert.
En effet, le positionnement du moyen de retenue MR correspond à un seuil d'enfoncement prédéterminé du piston mobile PM dans le corps creux CC dont le dépassement traduit l'atteinte du radar et donc un endommagement potentiel et par conséquent une défaillance potentielle du radar. Ainsi, une fois ce seuil dépassé, le piston mobile PM ne peut plus revenir en position nominale, et le circuit électrique demeure ouvert. Le diagnostic en continu fourni par ce signal électrique délivré par ce circuit électrique est donc représentatif de l'état ouvert ou fermé du circuit. Ce diagnostic est alors utilisé pour désactiver les fonctions utilisant le radar et informer le client du disfonctionnement temporaire du radar et en parallèle une phase d'évaluation du désalignement radar en roulage est effectuée. Ainsi, si la phase d'évaluation du désalignement radar en roulage confirme la défaillance du radar, l'alerte client deviendra critique requérant un passage en après-vente. Si la phase d'évaluation du désalignement radar en roulage infirme la défaillance du radar, l'alerte client temporaire sera changée en un message demandant au client de passer en après-vente mais les fonctions utilisant le radar seront réactivées. En effet, le piston ne sera pas revenu en position nominale, une action de remplacement ou de réamorçage du dispositif sera donc nécessaire en après-vente. Ce dispositif peut aussi être inséré dans le circuit d'alimentation du radar R, ce qui rendra inopérant le radar après un choc d'intensité prédéterminée correspondant à un enfoncement du bouclier B occasionnant un endommagement et donc une défaillance du radar R. Ce mode de réalisation est passif et n'implique pas de consommation énergétique supplémentaire. De plus, il est possible de combiner plusieurs dispositifs, notamment en série, et de les disposer autour du radar R, ce qui permet de diagnostiquer sur toute la périphérie du radar R. En outre, l'étanchéité du dispositif sera assurée par un joint torique sur le piston mobile PM de manière à garantir l'absence d'oxydation des zones de contact électrique.

Sur la **figure 4** sont représentées des vues en coupe de la structure du dispositif dans différentes positions :
- **figure 4A** : position intermédiaire durant un choc Ch atteignant le radar R. La course obtenue lors d'un enfoncement maximal pendant un choc doit être inférieure à la profondeur du corps creux CC de manière à contenir le ressort RS compressé. Le circuit électrique entre l'entrée E et la sortie S du circuit électrique s'ouvre et le piston mobile PM recule au-delà du moyen de retenue MR ;
- **figure 4B****.** position finale après un choc Ch ayant atteint le radar R. Le circuit électrique entre l'entrée E et la sortie S du circuit électrique reste ouvert grâce au moyen de retenue MR qui retient le piston mobile PM et l'empêche de revenir en position nominale.

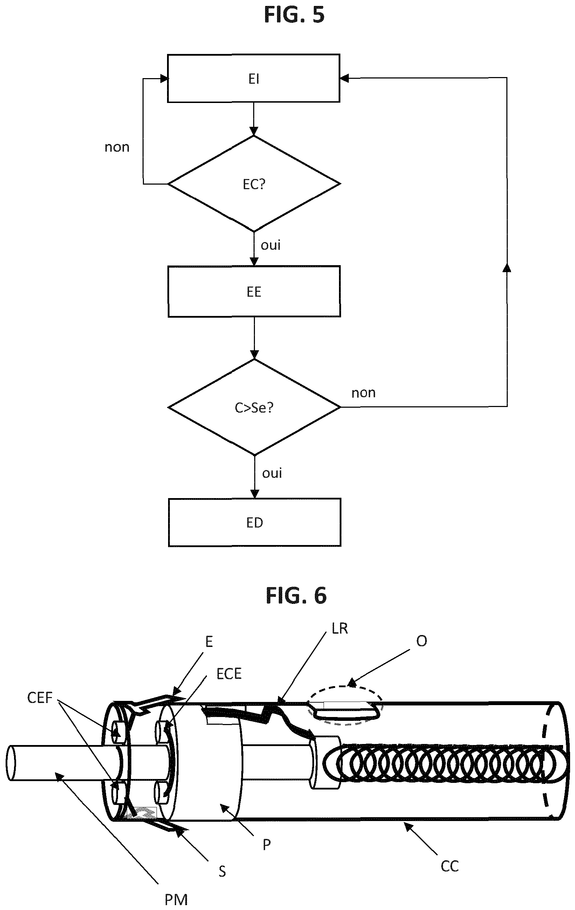

La **figure 5** synthétise dans un logigramme le mode de fonctionnement du dispositif selon l'invention.
Initialement, à l'état nominal El, le dispositif est en position nominale avec le contact électrique entre l'entrée E et la sortie S du circuit électrique fermé. Puis si une étape de choc EC a lieu, le dispositif passe dans un état d'enfoncement EE avec enfoncement du bouclier et coulissement du piston mobile PM dans le corps creux CC.
Alors, si le course C du piston mobile PM dans le corps creux CC devient supérieur au seuil Se d'enfoncement prédéterminé : C>Se, le dispositif passe dans un état de dépassement ED dans lequel le piston mobile PM a dépassé le moyen de retenue MR et le circuit électrique reste ouvert ;

Sinon, le piston mobile n'a pas dépassé le moyen de retenue MR et revient dans l'état initial El.

Par ailleurs, afin de rendre le dispositif ré-amorçable après un choc ayant dépassé le seuil Se d'enfoncement prédéterminé, le moyen de retenue MR peut être réarmable de manière à permettre la remise du piston en place. Cette caractéristique pratique et économique évite de changer le dispositif en cas de mise dans l'état de dépassement ED et deux exemples de tels modes de réalisation sont exposés dans les figures suivantes.

La **figure 6** illustre un tel dispositif ré-amorçable. Sur ce piston mobile PM, le plan P, en forme de disque par exemple, sensiblement perpendiculaire à la tige est situé entre la première extrémité de la tige, demeurant à l'extérieur du corps creux CC et la seconde extrémité de la tige, demeurant à l'intérieur dudit corps creux CC. Dans ce dispositif ré-amorçable le moyen de retenue comporte :
- une lame ressort LR coudée vers l'extérieur et fixée audit plan P et,
- un orifice O dans le corps creux CC servant à bloquer automatiquement la lame dès qu'elle s'insère dans l'orifice O quand le seuil Se d'enfoncement prédéterminé a été dépassé. Cette conformation permet de bénéficier d'un dispositif réarmable par l'extérieur du corps creux en appuyant sur ladite lame pour réarmer le dispositif qui devient alors réutilisable après une intervention par un professionnel en après-vente. La lame ressort LR présente une forme dissymétrique permettant de glisser le long de l'orifice O lors de l'impact et de rester bloquée dans l'orifice O après le choc Ch. Pour ce faire, la lame ressort LR présente une forme non symétrique de butée orientée vers l'extérieur du corps creux CC, la butée comportant un angle droit d'un côté et une pente douce de l'autre côté. C'est cette butée qui dépassera du corps creux CC une fois la lame ressort LR bloquée dans l'orifice O après le choc Ch. En outre, l'étanchéité du dispositif sera, comme précédemment, effectuée d'une part, au moyen d'un joint torique sur le piston mobile PM de manière à garantir l'absence d'oxydation des zones de contact électrique et d'autre part, afin de protéger le dispositif de l'humidité, l'orifice O peut être recouvert d'une protection semi-rigide telle qu'une membrane plastique bombée semi-rigide apte à se déformer sous la pression d'un doigt ou d'un outil dédié puis reprendre sa forme bombée initiale après l'appui de ré-amorçage. La pression nécessaire au ré-amorçage est suffisamment élevée de manière à s'assurer que le dispositif ne se réarme pas tout seul lors de vibrations sur mauvaise route. Cette figure illustre donc la position statique nominale, c'est à dire initiale avant un choc ou après un choc entraînant un déplacement du piston mobile PM dans le corps creux CC inférieur au seuil Se d'enfoncement prédéterminé. Le contact électrique est assuré entre l'entrée E et la sortie S du circuit électrique via les contacts entre les deux contacteurs électriques CEF fixes disjoints de la face interne d'entrée FE du corps creux CC et l'élément conducteur électrique ECE sur le plan P vertical.

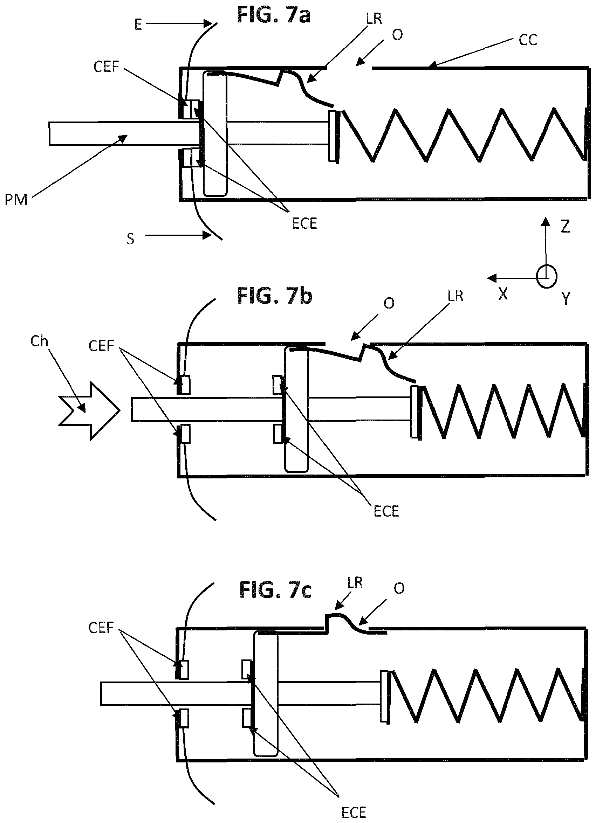

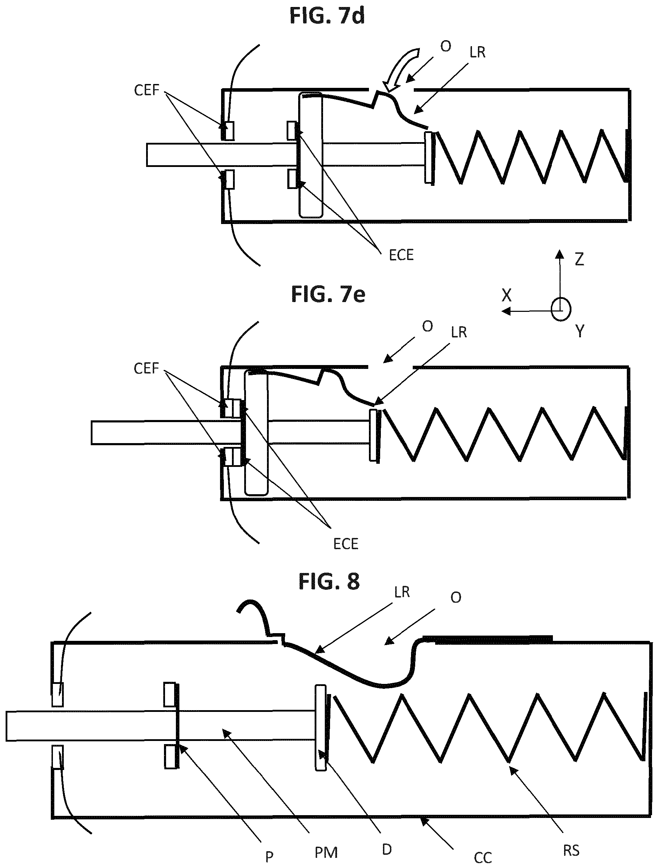

Sur la **figure 7** sont représentées des vues en coupe de la structure du dispositif dans différentes positions :
- **figure 7A** **:** position nominale,
- **figure 7B** : position intermédiaire durant un choc Ch atteignant le radar. Le circuit électrique entre l'entrée E et la sortie S du circuit électrique s'ouvre et le piston mobile PM recule au-delà du moyen de retenue constitué de l'orifice O et de la lame ressort LR. En effet la lame ressort LR coudée atteint, voire dépasse l'emplacement dans la paroi du corps creux CC de l'orifice O ;
- **figure 7C****.** position finale maintenue après un tel choc Ch ayant atteint le radar. Le circuit électrique entre l'entrée E et la sortie S du circuit électrique reste ouvert grâce à l'orifice O qui bloque la lame ressort LR et retient le piston PM enfoncé, l'empêchant de revenir en position nominale,
- **figure 7D** position de réamorçage du système en appuyant sur la lame ressort LR, comme représenté par la flèche. Le piston PM est alors libéré grâce à une action extérieure d'appui sur la lame pour dégager la lame ressort LR de l'orifice O,
- **figure 7E** Retour à la position initiale du piston PM, le contact électrique est de nouveau assuré entre l'entrée et la sortie du circuit électrique, le système est à nouveau opérationnel et ne détecte plus de défaillance.
La position de l'orifice O dans la paroi du corps creux CC par rapport à la face d'entrée FE du corps creux CC est déterminé de manière à ce que la distance entre le début de l'orifice O et le coude de la lame ressort LR soit égale à la distance entre la face interne du bouclier B et le radar R, cette distance de laquelle il faut retrancher l'épaisseur du plan P vertical correspondant au seuil Se d'enfoncement prédéterminé.

Le dispositif réarmable peut également être configuré selon la **figure 8****,** dans lequel le moyen de retenue comporte également un orifice O et une lame ressort LR coudée. De même, le plan P en forme de disque, sensiblement perpendiculaire à la tige est situé entre la première E1 et la seconde E2 extrémité de la tige du piston mobile PM. Cependant, ici, la lame ressort LR est coudée vers l'intérieur et fixée sur la paroi externe du corps creux CC. Ici, c'est aussi en position nominale que la lame ressort LR est bloquée dans l'orifice O. En effet, en position nominale le disque D à la seconde extrémité du piston mobile PM ne touche pas la lame ressort LR, puis en cas de choc détériorant le radar, ce disque D va pousser sur la lame LR, la soulevant et la dépassant, sans pouvoir revenir en position nominale car la lame ressort LR ne sera plus soulevée ni soulevable par la seule action du ressort RS grâce à la forme coudée de la lame LR qui bloque le passage du disque D situé à la seconde extrémité E2 du piston mobile PM. Pour ce faire, la lame ressort LR présente une forme non symétrique de butée orientée vers l'intérieur du corps creux CC, la butée comportant un angle droit d'un côté et une pente douce de l'autre côté. Cette conformation permet de bénéficier d'un dispositif réarmable par l'extérieur du corps creux CC en soulevant par l'extérieur l'extrémité libre, ici en crochet pour faciliter sa préhension, de ladite lame LR. Une fois soulevée par un agent extérieur, le piston mobile PM reprend sa position nominale, le dispositif devient alors réutilisable après une telle intervention par un professionnel en après-vente. De manière similaire au cas précédent, la position de l'orifice O et notamment du coude de la lame ressort LR dans cet orifice O par rapport à la face d'entrée FE du corps creux CC est fonction de la distance d'enfoncement admissible, c'est-à-dire de la distance sur l'axe horizontal entre la peau du bouclier B et le radar R.
Dans les configurations où l'extrémité E1 n'est pas en contact avec la peau du bouclier B, la distance suivant l'axe de translation du piston PM entre l'extrémité E1 et la peau du bouclier B est à retrancher de la distance entre la face interne du bouclier B et le radar R pour calculer le seuil Se d'enfoncement prédéterminé ou encore pour calculer la distance suivant ce même axe entre l'orifice O et la face d'entrée FE du corps creux CC, suivant le mode de réalisation choisi.

Le procédé de détection de défaillance des informations issues d'un radar R de bouclier B de véhicule automobile VEH au moyen du dispositif de détection de choc comporte :
- une étape de démarrage dudit véhicule,
- une étape de réception dudit signal électrique,
- une étape de diagnostic de l'état dudit circuit électrique,
- une étape d'alerte du conducteur en cas de diagnostic de circuit électrique ouvert.
Ce procédé peut en outre comprendre une étape de ré-amorçage du dispositif. Ce procédé est mis en œuvre par un calculateur embarqué du véhicule, préférentiellement le calculateur du radar ou du tableau de bord.
L'information de désactivation du radar sur le bus de données CAN (de l'anglais Controller Area Network) du véhicule sera interprétée par le calculateur qui commandera :
- un allumage de voyant sur le tableau de bord du véhicule et/ou
- une alerte sonore
pour signaler au conducteur la nécessité de faire contrôler par un professionnel le radar défaillant avant qu'il ne recommence un trajet.
Comme mentionné précédemment si le dispositif est inséré dans le circuit d'alimentation du radar R, l'étape de désactivation du radar R après un choc d'intensité prédéterminée correspondant à un enfoncement du bouclier B atteignant le radar R occasionnant un endommagement et donc une défaillance du radar R sera automatique et passive.
Ce dispositif est également applicable à tout système nécessitant une coupure d'alimentation lors de la détection d'un choc, ou d'une ouverture de porte par exemple.

## Revendications

1. Dispositif de détection de choc pour radar (R) de bouclier (B) de véhicule automobile (VEH) localisé dans la périphérie dudit radar (R), **caractérisé en ce qu'**il comporte :
- un corps creux (CC)
- un piston mobile (PM) comportant une tige dont une première extrémité (E1) demeure à l'extérieur dudit corps creux (CC) et dont une seconde extrémité (E2) demeure à l'intérieur dudit corps creux (CC) et ladite tige comporte entre ses deux extrémités (E1, E2) un plan (P) sensiblement perpendiculaire à ladite tige qui demeure à l'intérieur dudit corps creux (CC), ledit piston mobile (PM) étant apte à coulisser dans ledit corps creux (CC) en suivant un mouvement de translation fonction de la déformation locale dudit bouclier (B), ledit corps creux (CC) comportant une face d'entrée (FE) sensiblement perpendiculaire au mouvement dudit piston (PM), la surface périphérique interne de la face d'entrée (FE) formant un rebord apte à retenir la seconde extrémité (E2) dudit piston (PM) en position nominale (EI), des contacts électriques entre ledit piston (PM) et ledit corps creux (CC) formant en position nominale (EI) un circuit électrique fermé, et ledit circuit étant ouvert quand le piston (PM) est en position non-nominale dans ledit corps creux (CC),
- un moyen de rappel du piston (PM),
- un moyen de retenue (MR) apte à empêcher le rappel dudit piston (PM) vers la position nominale (EI) lorsque la course (C) d'enfoncement dudit piston (PM) dans ledit corps creux (CC) dépasse un seuil (Se) d'enfoncement prédéterminé.

2. Dispositif selon la revendication précédente, **caractérisé en ce que** en position nominale (EI), la première extrémité (E1) du piston mobile (PM) est en contact avec ledit bouclier (B).

3. Dispositif selon l'une quelconque des revendications précédentes, **caractérisé en ce que** ledit circuit électrique est formé par au moins un élément conducteur électrique (ECE) positionné sur ledit plan (P) dudit piston et par au moins deux contacteurs électriques fixes (CEF) disjoints localisés sur la surface périphérique de la face interne d'entrée (FE) et reliés respectivement à l'entrée (E) et la sortie (S) d'un circuit électrique.

4. Dispositif selon la revendication précédente, **caractérisé en ce que** ledit élément conducteur (ECE) est de forme au moins partiellement annulaire sur la périphérie dudit plan (P).

5. Dispositif selon l'une quelconque des revendications précédentes, **caractérisé en ce que** le moyen de rappel est un ressort (RS).

6. Dispositif selon l'une quelconque des revendications précédentes, **caractérisé en ce que** ledit moyen de retenue (MR) est solidaire de la périphérie interne du corps creux (CC) entre la face d'entrée (FE) et la face interne opposée en extrémité dudit corps creux (CC).

7. Dispositif selon la revendication précédente, **caractérisé en ce que** ledit moyen de retenue (MR) est un linguet métallique ou plastique formant une butée inclinée.

8. Dispositif selon l'une quelconque des revendications 1 à 5, **caractérisé en ce que** ledit moyen de retenue (MR) comporte une lame ressort (LR) fixée à la première extrémité (E1) du piston mobile (PM) et un orifice (O) dans le corps creux (CC), ladite lame (LR) et ledit orifice (O) étant conformés de manière à ce que la forme coudée de ladite lame (LR) s'insère en se bloquant automatiquement dans ledit orifice dès que le seuil (Se) d'enfoncement prédéterminé a été dépassé.

9. Dispositif selon l'une quelconque des revendications précédentes, **caractérisé en ce que** ledit dispositif est fixé à un châssis dudit véhicule (VEH) et notamment localisé sur le même plan vertical que ledit radar (R) à moins de 10 cm en-dessous ou au-dessus dudit radar (R).

10. Dispositif selon l'une quelconque des revendications précédentes, **caractérisé en ce qu'**il délivre un signal électrique représentatif de l'état ouvert ou fermé dudit circuit électrique.

11. Véhicule automobile (VEH) comprenant au moins un dispositif selon l'une quelconque des revendications précédentes.

12. Procédé de détection de défaillances d'un radar (R) de bouclier (B) de véhicule automobile (VEH) intégrant un dispositif de détection de choc selon la revendication 10, ledit procédé comportant :
- une étape de démarrage dudit véhicule (VEH),
- une étape de réception dudit signal électrique,
- une étape de diagnostic dudit radar (R),
- une étape d'alerte du conducteur en cas de diagnostic de radar (R) défaillant.

## Patentansprüche

1. Aufpralldetektionsvorrichtung für ein Radar (R) eines Stoßfängers (B) eines Kraftfahrzeugs (VEH), die sich in der Peripherie des Radars (R) befindet, **dadurch gekennzeichnet, dass** sie Folgendes aufweist:
- einen Hohlkörper (CC)
- einen beweglichen Kolben (PM), der einen Stift aufweist, von dem ein erstes Ende (E1) außerhalb des Hohlkörpers (CC) verbleibt und von dem ein zweites Ende (E2) innerhalb des Hohlkörpers (CC) verbleibt und der Stift zwischen seinen zwei Enden (E1, E2) eine Ebene (P) aufweist, die im Wesentlichen senkrecht zum Stift verläuft, die innerhalb des Hohlkörpers (CC) verbleibt, wobei der bewegliche Kolben (PM) geeignet ist, in einer Translationsbewegung in Abhängigkeit von der lokalen Verformung des Stoßfängers (B) im Hohlkörper (CC) zu gleiten, wobei der Hohlkörper (CC) eine Eintrittsfläche (FE) aufweist, die im Wesentlichen senkrecht zur Bewegung des Kolbens (PM) verläuft, wobei die Innenumfangsfläche der Eintrittsfläche (FE) einen Rand bildet, der geeignet ist, das zweite Ende (E2) des Kolbens (PM) in Nennposition (El) zurückzuhalten, wobei elektrische Kontakte zwischen dem Kolben (PM) und dem Hohlkörper (CC) in Nennposition (El) einen geschlossenen Stromkreis bilden, und der Kreis offen ist, wenn sich der Kolben (PM) in Nicht-Nennposition im Hohlkörper (CC) befindet,
- ein Mittel zur Rückstellung des Kolbens (PM),
- ein Rückhaltemittel (MR), das geeignet ist, die Rückstellung des Kolbens (PM) zur Nennposition (El) zu verhindern, wenn die Eindringstrecke (C) des Kolbens (PM) in den Hohlkörper (CC) eine vorbestimmte Eindringschwelle (Se) überschreitet.

2. Vorrichtung nach dem vorhergehenden Anspruch, **dadurch gekennzeichnet, dass** in Nennposition (El) das erste Ende (E1) des beweglichen Kolbens (PM) mit dem Stoßfänger (B) in Kontakt steht.

3. Vorrichtung nach einem der vorhergehenden Ansprüche, **dadurch gekennzeichnet, dass** der Stromkreis von mindestens einem elektrisch leitendem Element (ECE), das auf der Ebene (P) des Kolbens positioniert ist, und von mindestens zwei getrennten festen elektrischen Schützen (CEF), die sich auf der Umfangsfläche der inneren Eintrittsfläche (FE) befinden und jeweils mit dem Eingang (E) und dem Ausgang (S) eines Stromkreises verbunden sind, gebildet ist.

4. Vorrichtung nach dem vorhergehenden Anspruch, **dadurch gekennzeichnet, dass** das leitende Element (ECE) wenigstens teilweise ringförmig auf der Peripherie der Ebene (P) vorliegt.

5. Vorrichtung nach einem der vorhergehenden Ansprüche, **dadurch gekennzeichnet, dass** das Rückstellmittel eine Feder (RS) ist.

6. Vorrichtung nach einem der vorhergehenden Ansprüche, **dadurch gekennzeichnet, dass** das Rückhaltemittel (MR) fest mit dem Innenumfang des Hohlkörpers (CC) zwischen der Eintrittsfläche (FE) und der gegenüberliegenden Innenfläche am Ende des Hohlkörpers (CC) verbunden ist.

7. Vorrichtung nach dem vorhergehenden Anspruch, **dadurch gekennzeichnet, dass** das Rückhaltemittel (MR) ein Feststeller aus Metall oder Kunststoff ist, der einen geneigten Anschlag bildet.

8. Vorrichtung nach einem der Ansprüche 1 bis 5, **dadurch gekennzeichnet, dass** das Rückhaltemittel (MR) ein Federblatt (LR), das am ersten Ende (E1) des beweglichen Kolbens (PM) befestigt ist, und eine Öffnung (O) im Hohlkörper (CC) aufweist, wobei das Blatt (LR) und die Öffnung (O) so ausgebildet sind, dass sich die gebogene Form des Blatts (LR) unter automatischer Arretierung in die Öffnung einfügt, sobald die vorbestimmte Eindringschwelle (Se) überschritten wurde.

9. Vorrichtung nach einem der vorhergehenden Ansprüche, **dadurch gekennzeichnet, dass** die Vorrichtung auf einem Fahrgestell des Fahrzeugs (VEH) befestigt ist und sich insbesondere auf derselben vertikalen Ebene wie das Radar (R) weniger als 10 cm unter- oder oberhalb des Radars (R) befindet.

10. Vorrichtung nach einem der vorhergehenden Ansprüche, **dadurch gekennzeichnet, dass** sie ein elektrisches Signal liefert, das für den offenen oder geschlossenen Zustand des Stromkreises repräsentativ ist.

11. Kraftfahrzeug (VEH) umfassend mindestens eine Vorrichtung nach einem der vorhergehenden Ansprüche.

12. Verfahren zur Detektion von Fehlern eines Radars (R) eines Stoßfängers (B) eines Kraftfahrzeugs (VEH), das eine Aufpralldetektionsvorrichtung nach Anspruch 10 enthält, das Verfahren aufweisend:
- einen Schritt des Anlassens des Fahrzeugs (VEH),
- einen Schritt des Empfangens des elektrischen Signals,
- einen Schritt des Diagnostizierens des Radars (R),
- einen Schritt des Warnens des Fahrers im Falle einer Diagnose eines fehlerhaften Radars (R).

## Claims

1. Impact detection device for radar (R) of a bumper (B) of a motor vehicle (VEH) located in the periphery of said radar (R), **characterized in that** it comprises:
- a hollow body (CC)
- a movable piston (PM) comprising a rod of which a first end (E1) remains outside of said hollow body (CC) and of which a second end (E2) remains inside said hollow body (CC) and said rod comprises, between its two ends (E1, E2), a plane (P) substantially at right angles to said rod which remains inside said hollow body (CC), said movable piston (PM) being able to slide in said hollow body (CC) according to a translational movement as a function of the local deformation of said bumper (B), said hollow body (CC) comprising an input face (FE) substantially at right angles to the movement of said piston (PM), the inner peripheral surface of said input face (FE) forming a lip that can retain the second end (E2) of said piston (PM) in nominal position (EI), electrical contacts between said piston (PM) and said hollow body (CC) forming, in nominal position (EI), a closed electrical circuit, and said circuit being open when the piston (PM) is in non-nominal position in said hollow body (CC),
- a piston (PM) return means,
- a retaining means (MR) capable of preventing the return of said piston (PM) to the nominal position (EI) when the travel (C) by which said piston (PM) is driven into said hollow body (CC) exceeds a predetermined driving-in threshold (Se).

2. Device according to the preceding claim, **characterized in that**, in nominal position (EI), the first end (E1) of the movable piston (PM) is in contact with said bumper (B).

3. Device according to either one of the preceding claims, **characterized in that** said electrical circuit is formed by at least one electrically conductive element (ECE) positioned on said plane (P) of said piston and by at least two separate fixed electrical contacts (CEF) located on the peripheral surface of the input inner face (FE) and linked respectively to the input (E) and the output (S) of an electrical circuit.

4. Device according to the preceding claim, **characterized in that** said conductive element (ECE) is of at least partially annular form on the periphery of said plane (P).

5. Device according to any one of the preceding claims, **characterized in that** the return means is a spring (RS).

6. Device according to any one of the preceding claims, **characterized in that** said retaining means (MR) is secured to the inner periphery of the hollow body (CC) between the input face (FE) and the opposite inner face at the end of said hollow body (CC).

7. Device according to the preceding claim, **characterized in that** said retaining means (MR) is a metal or plastic pawl forming an inclined abutment.

8. Device according to any one of Claims 1 to 5, **characterized in that** said retaining means (MR) comprises a spring leaf (LR) fixed to the first end (E1) of the movable piston (PM) and an orifice (O) in the hollow body (CC), said leaf (LR) and said orifice (O) being configured so that the bent form of said leaf (LR) is inserted while being blocked automatically in said orifice as soon as the predetermined driving-in threshold (Se) has been exceeded.

9. Device according to any one of the preceding claims, **characterized in that** said device is fixed to a chassis of said vehicle (VEH) and notably located on the same vertical plane as said radar (R) at less than 10 cm below or above said radar (R).

10. Device according to any one of the preceding claims, **characterized in that** it delivers an electrical signal representative of the open or closed state of said electrical circuit.

11. Motor vehicle (VEH) comprising at least one device according to any one of the preceding claims.

12. Method for detecting failures of a radar (R) of a bumper (B) of a motor vehicle (VEH) incorporating an impact detection device according to Claim 10, said method comprising:
- a step of starting of said vehicle (VEH),
- a step of reception of said electrical signal,
- a step of diagnosis of said radar (R),
- a step of alerting the driver in case of a defective radar (R) diagnosic.
